# EUROPÄISCHE PATENTSCHRIFT

(11) **EP 3 439 784 B1**
(45) Veröffentlichungstag und Bekanntmachung des Hinweises auf die Patenterteilung: **06.05.2020**
(21) Anmeldenummer: 17716151.0
(22) Anmeldetag: 03.04.2017
(51) Int. Cl.: B02C 1/02, F16B 2/14, F16B 4/00, F16B 5/02

(54) **VERBINDUNGSANORDNUNG ZUR VERBINDUNG VON GEHÄUSETEILEN EINES BRECHERS**
CONNECTING ASSEMBLY FOR CONNECTING HOUSING PARTS OF A CRUSHER
SYSTÈME D'ASSEMBLAGE SERVANT À L'ASSEMBLAGE D'ÉLÉMENTS DE CARTER D'UN BROYEUR

(30) Priorität: 05.04.2016 DE 102016106177
(43) Veröffentlichungstag der Anmeldung: 13.02.2019
(73) Patentinhaber: thyssenkrupp Industrial Solutions AG, 45143 Essen (DE); thyssenkrupp AG, 45143 Essen (DE)
(72) Erfinder: SZCZELINA, Piotr, 59269 Beckum (DE)
(74) Vertreter: thyssenkrupp Intellectual Property GmbH
(86) Internationale Anmeldenummer: PCT/EP2017/057850
(87) Internationale Veröffentlichungsnummer: WO 2017/174506

(56) Entgegenhaltungen:
- WO-A1-2011/034494
- FR-A1- 3 002 993
- JP-A- 2003 239 918
- US-B2- 8 777 145

## Beschreibung

Die vorliegende Erfindung betrifft eine Verbindungsanordnung zur lösbaren Verbindung eines ersten Gehäuseteils mit wenigstens einem zweiten Gehäuseteil des Gehäuses eines Brechers zur Zerkleinerung von Brechgut, wobei ein Spreizelement vorgesehen ist, das in eine zylindrische Aufnahmeöffnung einsetzbar ist, die sich wenigstens teilweise in beide Gehäuseteile entlang einer Öffnungsachse hinein erstreckt, wobei das Spreizelement mittels einem weiterhin vorgesehenen Konuselement nach außen und damit radial zur Öffnungsachse gegen die Innenseiten der Aufnahmeöffnung verspannbar ist. Die Erfindung richtet sich weiterhin auf einen Brecher zur Zerkleinerung von Brechgut mit einer solchen Verbindungsanordnung.

### STAND DER TECHNIK

In den meisten Fällen werden Gehäuseteile des Gehäuses eines Brechers, also beispielsweise die Frontwand, die Rückwand oder Seitenwände, miteinander verschweißt. Verschweißte Baugruppen wie beispielsweise Gehäuseteile des Gehäuses bilden bei kleinen Baugrößen von Brechern keine größeren Schwierigkeiten, bei größeren Abmessungen eines Brechergehäuses jedoch nimmt der Aufwand zur Bearbeitung des gesamten Gehäuses zu und wird entsprechend kostspielig. Häufig werden die Gehäuse von Brechern zur weiteren Fertigung vormontiert, um diese insbesondere spanend zu bearbeiten. Um die Brechergehäuse an den Einsatzort zu transportieren, ist es allerdings wünschenswert, die einzelnen Baugruppen eines großen Brechergehäuses wieder zu demontieren. Folglich entsteht die Forderung nach hochbelastbaren Verbindungsanordnungen zur lösbaren gegenseitigen Verbindung von Gehäuseteilen eines Brechers.

Bekannt sind dabei Schrauben und unterschiedliche Verbindungselemente wie Bolzen, Keile, Nuten und dergleichen, mit denen ein entsprechender Formschluss zwischen den Gehäuseteilen erzeugbar ist. Die meisten Verbindungselemente wie beispielsweise Bolzen und Stifte werden mit Spiel zwischen einem Loch und dem Bolzen eingebaut. Durch dieses Spiel ist die Verbindung bei schlagartigen Belastungen im Brecher gegen Ausschlagen anfällig. Dazu sind die Spannungen im Loch örtlich sehr hoch, was zu Verformungen und einem frühen Ausfall der Gehäuseteile führen kann. Aus diesem Grund werden bei manchen Konstruktionen die Bolzen mit Übermaß gefertigt, unterkühlt und als Pressverbindung eingebaut. Derartige Verbindungen sind jedoch nach einer Fertigstellung des Brechergehäuses zur Demontage ungeeignet, um die einzelnen Baugruppen an den Einsatzort zu transportieren.

Beispielsweise zeigt die EP 0 327 105 A2 Verbindungsanordnungen von Gehäuseteilen eines Brechers mit einem Keil, wobei auch eine solche Keilverbindung anfällig ist gegen Verschleiß, da die Nachgiebigkeiten in der Keilverbindung häufig groß sind, und über elastische Verformungen der sich im Kraftfluss der Verspannung befindenden Bauteile kann eine Lockerung der Keilverbindung stattfinden.

Beispielhaft zeigt auch die US 8,777,145 B2 zwischen Gehäuseteilen ausgebildete Verschraubungen mit großflächigen Plananlagen der plattenartigen Gehäuseteile zueinander. Eine sichere Verbindung wird bei großen Belastungen eines Brechers damit ebenfalls nicht erreicht.

Aus der FR 3 002 993 A1 ist eine Verbindungsanordnung zur lösbaren Verbindung eines ersten plattenartigen Bauteils mit wenigstens einem zweiten plattenartigen Bauteil bekannt, wobei ein Spreizelement vorgesehen ist, das in eine zylindrische Aufnahmeöffnung einsetzbar ist, die sich durch beide plattenartigen Bauteile entlang einer Öffnungsachse erstreckt, wobei das Spreizelement mittels einem weiterhin vorgesehenen Konuselement nach außen und damit radial zur Öffnungsachse gegen die Innenseiten der Aufnahmeöffnung verspannbar ist. Nachteilhafterweise müssen die plattenartigen Bauteile in ihrer Anordnung aufeinander von beiden Seiten zugänglich sein, um das Konuselement von einer ersten Seite in einen inneren Bereich des Spreizelementes einzusetzen und dieses von einer gegenüberliegenden zweiten Seite mit einer Mutter zu verspannen, um das Konuselement in das Spreizelement einzuziehen. Wenn die beiden plattenartigen Bauteile die Gehäuseteile eines Bechers zur Zerkleinerung von Brechgut bilden, ist eine Zugänglichkeit von beiden Gehäuseseiten nicht grundsätzlich gewährleistet. Ferner kann keine Rippe auf einer insbesondere inneren Gehäuseseite des Brechers im Bereich der Verbindungsanordnung vorgesehen werden, da die beidseitige Zugänglichkeit dann nicht mehr gegeben wäre.

### OFFENBARUNG DER ERFINDUNG

Aufgabe der Erfindung ist die Weiterbildung einer Verbindungsanordnung zur lösbaren Verbindung von Gehäuseteilen eines Gehäuses für einen Brecher, die hohen Belastungen standhalten kann und bei Bedarf auf einfache Weise wieder demontiert werden kann.

Diese Aufgabe wird ausgehend von einer Verbindungsanordnung gemäß Anspruch 1 und ausgehend von einem Brecher gemäß Anspruch 6 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass das Spreizelement eine Topfform mit einem einseitig offenen Innenraum aufweist, wobei das Konuselement im Innenraum des topfförmigen Spreizelementes einsitzt, und wobei das Spreizelement eine konusförmige Innenkontur aufweist, die auf einer konusförmigen Außenkontur des Konuselementes aufsitzt, und wobei Schraubelemente vorgesehen sind, mit denen das Konuselement in das Spreizelement unter Aufspreizung einer äußeren Zylindermantelfläche des Spreizelementes (15) einziehbar ist.

Kerngedanke der Erfindung ist der einseitige Einsatz eines Spreizelementes in einer Aufnahmeöffnung, die sich durch beide Gehäuseteile hindurch erstreckt. Die Gehäuseteile sind zumeist plattenartig ausgebildet, und die Öffnungsachse steht dabei senkrecht zur Erstreckungsebene der Gehäuseteile. Kräfte, die sich insbesondere in der Erstreckungsebene der Gehäuseteile aufbauen und diese gegeneinander verschieben, können mit der erfindungsgemäßen Verbindungsanordnung auf vorteilhafte Weise aufgenommen werden. Insbesondere in Verbindung mit gewöhnlichen Schraubverbindungen der Gehäuseteile aufeinander ist die Verbindungsanordnung vorteilhafterweise dazu ausgebildet, sehr hohe Kräfte aufzunehmen, und die Verbindungsanordnung ist bei Bedarf auf einfache Weise wieder lösbar bzw. demontierbar. Die schnelle Demontierbarkeit insbesondere des Spreizelementes selber bringen erhebliche Vorteile bei einer Reparatur, und es kann damit eine leichte Reparatur bei einem Verschleiß der Gehäuseteile aber auch der Verbindung selbst vorgenommen werden.

Die Spreizung des Spreizelementes erfolgt elastisch, sodass bei einer Verspannung des Konuselementes mit dem Spreizelement eine Verspannung des Spreizelementes in den Innenseiten der Aufnahmeöffnung möglich ist. Insbesondere dann, wenn die Aufnahmeöffnung um die Öffnungsachse herum rund ausgebildet ist, besteht auf vorteilhafte Weise die Möglichkeit, das Spreizelement innerhalb der Aufnahmeöffnung aufzuspreizen, sodass sich das Spreizelement gegen die Innenseiten der Aufnahmeöffnung verspannt.

Das Spreizelement erstreckt sich über beide Gehäuseteile, insbesondere erstreckt sich das Spreizelement über im Wesentlichen beide Dicken der Gehäuseteile. Somit können auch Maßabweichungen den Abschnitten der Aufnahmeöffnung ausgeglichen werden, die in den jeweiligen Gehäuseteilen eingebracht sind und die Aufnahmeöffnung in den Gehäuseteilen kann innerhalb vorgegebener Toleranzen voneinander abweichen. Mit dem Einsatz des Spreizelementes können derartige Abweichungen auf einfache Weise ausgeglichen werden.

Erfindungsgemäß ist die Aufnahmeöffnung im Wesentlichen zylindrisch ausgebildet, und es ist vorgesehen, dass das Spreizelement eine Außenseite mit der Form eines Zylindermantels aufweist, sodass das Spreizelement in einem unverspannten Zustand in die Aufnahmeöffnung einsetzbar ist und in einem verspannten Zustand in der Aufnahmeöffnung selbsthaltend einsitzt. Damit bietet die Verbindungsanordnung den Vorteil, beispielsweise nach der Fertigstellung des Gehäuses die einzelnen Gehäuseteile wieder zu demontieren, indem die Verspannung zwischen dem Spreizelement und dem Konuselement wieder gelöst wird. Anschließend ist das Spreizelement und folglich auch das Konuselement aus der Aufnahmeöffnung wieder entnehmbar, und die beiden Gehäuseteile können wieder vereinzelt werden.

Gemäß einem weiteren Aspekt der Erfindung weist das Spreizelement eine Topfform mit einem einseitig offenen Innenraum auf, wobei das Konuselement im Innenraum des topfförmigen Spreizelementes einsitzt. Zur Verspannung weist das Spreizelement eine konusförmige Innenkontur auf, die auf einer konusförmigen Außenkontur des Konuselementes aufsitzt. Hierfür weist die konusförmige Innenkontur des Spreizelementes und die konusförmige Außenkontur des Konuselementes einen zueinander gleichen Konuswinkel auf. Um die Spreizung des Spreizelementes zu verbessern, ist der Zylindermantel des Spreizelementes vorteilhafterweise geschlitzt ausgeführt, sodass das Prinzip einer Spannzange erfüllt ist, gemäß dem die äußere Mantelfläche des Spreizelementes bei einem Einziehen des Konuselementes in den topfförmigen Innenraum des Spreizelementes aufweitbar ist.

Um das Ansetzen von Passungsrost zu verhindern, sind die Teile selbst, insbesondere das Spreizelement und/oder das Konuselement, mit einer Beschichtung versehen.

Um eine Verspannung zwischen dem Konuselement und dem Spreizelement zu erzeugen, sind erfindungsgemäß Schraubelemente vorgesehen, mit denen das Konuselement in das Spreizelement unter Aufspreizung der äußeren Zylindermantelfläche des Spreizelementes einziehbar ist. Insbesondere können mehrere Schraubelemente über einen Umfang gleich verteilt vorgesehen sein, und die Schraubelemente sind in das Konuselement eingeschraubt. Hierfür weist das Konuselement bevorzugt Gewindebohrungen auf.

Auch ist es von Vorteil, wenn das Spreizelement einen Bodenabschnitt aufweist, in dem die Schraubelemente parallel zur Öffnungsachse eingesetzt sind. Insbesondere können die Schraubelemente den Bodenabschnitt durchwandern, indem der Bodenabschnitt Bohrungen aufweist, durch die die Schraubelemente hindurchgeführt sind. Schließlich sind die Schraubelemente anschließend in den Gewindebohrungen im Konuselement verschraubbar. Damit ergibt sich der Vorteil, dass die Schraubelemente auch bei einer montierten Verbindungsanordnung von einer Seite der Gehäuseteile gut erreichbar sind.

Ein weiterer Vorteil wird erreicht, wenn der Bodenabschnitt einen Durchmesser aufweist, der größer ist als der Durchmesser der Aufnahmeöffnung, sodass der Bodenabschnitt mit einem überstehenden Kragen an der Seitenfläche eines ersten Gehäuseteils anliegt. Dadurch wird verhindert, dass bei einem Verspannen des Spreizelementes mit dem Konuselement das Spreizelement in die Aufnahmeöffnung eingezogen wird. Zudem ergibt sich der Vorteil, dass keine Verunreinigungen in die Aufnahmeöffnung eintreten können, insbesondere wenn der Brecher in Betrieb genommen wird.

Die Verbindungsanordnung weist erfindungsgemäß zusätzlich zur planaren Verspannung der Gehäuseteile mittels des Spreizelements und dem Konuselement benachbart zur Aufnahmeöffnung Schraubverbindungen auf, die zur Verschraubung des ersten Gehäuseteils mit dem zweiten Gehäuseteil vorgesehen sind. Durch diese Verschraubung werden die Gehäuseteile mit den Schraubverbindungen folglich plan aufeinander gepresst. Die Verbindungsanordnung ermöglicht damit eine planare Ausrichtung der Gehäuseteile zueinander mittels der Aufnahmeöffnung und dem verspannten Spreizelement, und in orthogonaler Richtung zu den plattenartigen Gehäuseteilen sind vorzugsweise mehrere Schraubverbindungen vorgesehen, die erst in Verbindung mit der Verspannung durch das Spreizelement in planarer Erstreckung die Gehäuseteile vollständig miteinander verbinden.

Die Erfindung richtet sich weiterhin auf einen Brecher zur Zerkleinerung von Brechgut, mit einer Verbindungsanordnung zur lösbaren Verbindung eines ersten Gehäuseteils mit wenigstens einem zweiten Gehäuseteil des Gehäuses des Brechers. Erfindungsgemäß weisen die Gehäuseteile eine gemeinsame Aufnahmeöffnung auf, die sich wenigstens teilweise in beide Gehäuseteile entlang einer Öffnungsachse hinein erstreckt, wobei in der Aufnahmeöffnung ein Spreizelement eingesetzt ist, das mittels einem Konuselement nach außen und damit radial zur Öffnungsachse gegen die Innenseiten der Aufnahmeöffnung verspannbar ist. Die Gehäuseteile sind dabei insbesondere plattenartig ausgebildet, wobei die Öffnungsachse senkrecht auf der Erstreckungsebene der plattenartigen Gehäuseteile steht.

Weitere Merkmale und zugehörige Vorteile, die in Verbindung mit der Verbindungsanordnung vorstehend bereits dargelegt sind, finden für den erfindungsgemäßen Brecher ebenfalls Berücksichtigung. Als Gehäuseteile können mit der erfindungsgemäßen Verbindungsanordnung beispielsweise eine Frontwand, eine Rückwand und/oder Seitenwände jeweils miteinander verbunden werden, wobei der Brecher als Backenbrecher, als Kreiselbrecher, als Kegelbrecher oder dergleichen ausgebildet sein kann. Insbesondere bei Backenbrechern bietet sich die Verwendung der erfindungsgemäßen Verbindungsanordnung an, um Seitenwände mit einer Frontwand und mit einer Rückwand entsprechend zu verbinden. Die Gehäuseteile sollten dabei zumindest abschnittsweise eine plane Erstreckung aufweisen, und zueinander parallel angeordnet werden können. Die plane Erstreckung sollte wenigstens das Maß der Aufnahmeöffnung aufweisen, besonders vorteilhaft ist es, wenn benachbart zur Aufnahmeöffnung noch Schraubverbindungen, beispielsweise in vierfacher Anordnung vorgesehen werden können.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht eines Brechers mit mehreren Verbindungsanordnungen gemäß der Erfindung,
- Figur 2: eine Querschnittsansicht durch eine einzelne Verbindungsanordnung gemäß der Erfindung und
- Figur 3: eine Aufnahmeöffnung in zwei aufeinander gebrachten Gehäuseteilen des Gehäuses eines Brechers.

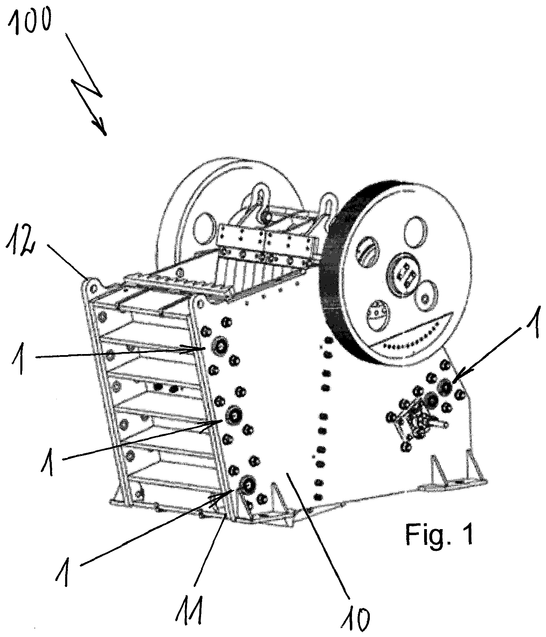

Figur 1 zeigt einen Brecher 100, der beispielhaft als Backenbrecher ausgeführt ist. Der Brecher 100 weist ein Gehäuse 12 auf, und das Gehäuse 12 ist aus mehreren Gehäuseteilen 10, 11 aufgebaut. Das Gehäuseteil 10 bildet beispielsweise eine Seitenwand und das Gehäuseteil 11 bildet eine Rückwand. In seitlichen Abschnitten verlaufen die Gehäuseteile 10 und 11 parallel zueinander, und in den Abschnitten sind mehrere Verbindungsanordnungen 1 erfindungsgemäß ausgeführt, um die Gehäuseteile 10 und 11 miteinander zu verbinden. Die beispielhaft dargestellten Verbindungsanordnungen 1 können auch auf der gegenüberliegenden Seite des Gehäuseteils 10 ebenfalls dazu dienen, ein weiteres Gehäuseteil 10 mit dem Gehäuseteil 11 zu verbinden. Ebenfalls dienen weitere Verbindungsanordnungen 1 zur Verbindung beispielsweise einer Front- oder Rückwand mit den Seitenwänden.

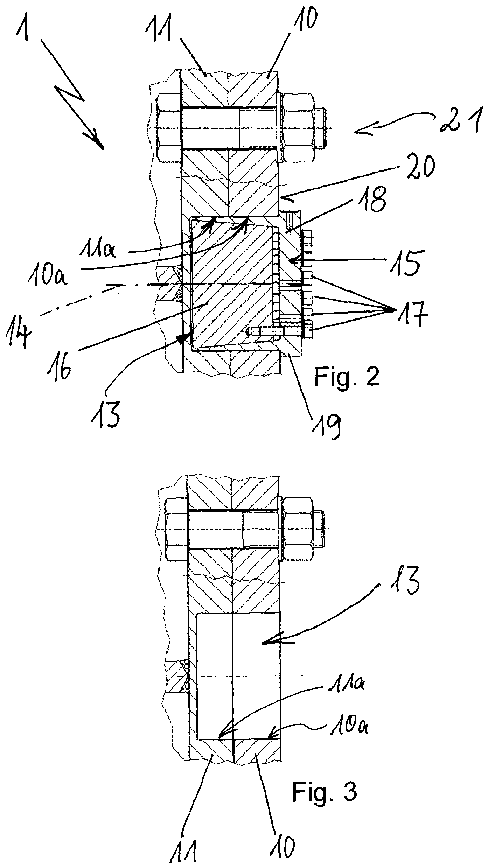

Figur 2 zeigt eine Querschnittsansicht durch eine Verbindungsanordnung 1, und die Gehäuseteile 10 und 11 sind quergeschnitten dargestellt. Die Gehäuseteile 10 und 11 sind plan aufeinander angeordnet, und eine Aufnahmeöffnung 13 ist in die Gehäuseteile 10 und 11 eingebracht. Die Aufnahmeöffnung 13 ist als Zylinderbohrung ausgebildet und erstreckt sich um eine Öffnungsachse 14. Beginnend von der Seitenfläche 20 des Gehäuseteils 10 erstreckt sich die Aufnahmeöffnung 13 in die beiden Gehäuseteile 10 hinein, wobei sich die Aufnahmeöffnung 13 mit Bezug auf das Gehäuseteil 11 nicht über der gesamten Dicke erstreckt. Folglich entsteht ein topfartiger Einsatz durch die Aufnahmeöffnung 13, in der die Verbindungsanordnung 1 ausgebildet wird.

Die Verbindungsanordnung 1 umfasst ein Spreizelement 15, das eine äußere Zylindermantelfläche aufweist, über die das Spreizelement 15 beispielsweise mit einer Spielpassung im zunächst spannungsfreien Zustand in die Aufnahmeöffnung 13 einsetzbar ist. Die äußere Zylindermantelfläche des Spreizelementes 15 liegt dabei gegen die Innenseiten 10a und 11a der Gehäuseteile 10 und 11 an.

Das Spreizelement 15 weist einen Bodenabschnitt 18 auf, von dem sich ein kragenförmiger Spreizhülsenabschnitt erstreckt, der in die Aufnahmeöffnung 13 hineinragt. Der Bodenabschnitt selbst steht über der Seitenfläche 20 des Gehäuseteils 10 hervor.

Innerhalb des Spreizelementes 15 ist ein Konuselement 16 eingesetzt, und das Konuselement 16 weist eine konische Außenfläche auf, die mit der konischen Innenfläche des topfartigen Spreizelementes 15 korrespondiert, d.h. der Konuswinkel des Konuselementes 16 stimmt mit dem Konuswinkel der Innenseite des Spreizelementes 15 überein.

Mit Schraubelementen 17 ist das Konuselement 17 in das Spreizelement 15 einziehbar, sodass das Spreizelement 15 gegen die Innenseiten 10a und 11a der Gehäuseteile 10 und 11 aufspreizt und damit die Gehäuseteile 10 und 11 miteinander verspannt. Durch die Anordnung mehrerer Schraubelemente 17 ist das Konuselement 16 entsprechend tief in das Spreizelement 15 einziehbar, sodass sich das Spreizelement 15 aufweitet, wobei die Aufweitung des Spreizelementes 15 dadurch unterstützt wird, dass das Spreizelement 15 auf nicht näher gezeigte Weise geschlitzt ausgebildet ist.

Der Bodenabschnitt 18 weist einen Kragen 19 auf, der die Aufnahmeöffnung 13 radial überragt, sodass mit dem Bodenabschnitt 18 die Aufnahmeöffnung 13 bei einem eingesetzten Spreizelement 15 im Wesentlichen verschlossen ist.

Benachbart zur Aufnahmeöffnung 13 mit dem eingesetzten Spreizelement 15 und dem Konuselement 16 befindet sich eine Schraubverbindung 21, mit der die Gehäuseteile 10 und 11 plan aufeinander gepresst werden. Die Aufnahmeöffnung 13 mit dem eingesetzten Spreizelement 15 und dem Konuselement 16 dient zur planaren Verspannung der Gehäuseteile 10 und 11, und zur orthogonalen Verspannung dienen mehrere Schraubverbindungen 21, die benachbart zur Aufnahmeöffnung 13 angeordnet sind, und von denen beispielhaft eine gezeigt ist.

Die Figur 3 zeigt die in die Gehäuseteile 10 und 11 eingebrachte Aufnahmeöffnung 13 ohne Anordnung eines Spreizelementes 15 und eines Konuselementes 16. Gezeigt sind die Innenseiten 10a und 11a der Gehäuseteile 10 und 11, die Maßabweichungen zueinander aufweisen können. Derartige Maßabweichungen können durch eine Aufweitung der äußeren Zylindermantelfläche des Spreizelementes 15 überwunden werden, sodass fertigungstechnische Vorteile entstehen, und die Abschnitte der Aufnahmeöffnung 13 in den jeweiligen Gehäuseteilen 10 und 11 können beispielsweise unabhängig voneinander gefertigt werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht, sofern sie durch den Umfang der Ansprüche abgedeckt werden.

### Bezugszeichenliste

- 100: Brecher

- 1: Verbindungsanordnung
- 10: Gehäuseteil
- 10a: Innenseite
- 11: Gehäuseteil
- 11a: Innenseite
- 12: Gehäuse
- 13: Aufnahmeöffnung
- 14: Öffnungsachse
- 15: Spreizelement
- 16: Konuselement
- 17: Schraubelement
- 18: Bodenabschnitt
- 19: Kragen
- 20: Seitenfläche
- 21: Schraubverbindung

## Patentansprüche

1. Verbindungsanordnung (1) zur lösbaren Verbindung eines ersten Gehäuseteils (10) mit wenigstens einem zweiten Gehäuseteil (11) des Gehäuses (12) eines Brechers (100) zur Zerkleinerung von Brechgut, wobei ein Spreizelement (15) vorgesehen ist, das in eine zylindrische Aufnahmeöffnung (13) einsetzbar ist, die sich wenigstens teilweise in beide Gehäuseteile (10, 11) entlang einer Öffnungsachse (14) hinein erstreckt, wobei das Spreizelement (15) mittels einem weiterhin vorgesehenen Konuselement (16) nach außen und damit radial zur Öffnungsachse (14) gegen die Innenseiten (10a, 11a) der Aufnahmeöffnung (13) verspannbar ist,
**dadurch gekennzeichnet, dass** das Spreizelement (15) eine Topfform mit einem einseitig offenen Innenraum aufweist, wobei das Konuselement (16) im Innenraum des topfförmigen Spreizelementes (15) einsitzt, und wobei das Spreizelement (15) eine konusförmige Innenkontur aufweist, die auf einer konusförmigen Außenkontur des Konuselementes (16) aufsitzt, und wobei Schraubelemente (17) vorgesehen sind, mit denen das Konuselement (16) in das Spreizelement (15) unter Aufspreizung einer äußeren Zylindermantelfläche des Spreizelementes (15) einziehbar ist.

2. Verbindungsanordnung (1) nach Anspruch 1, **dadurch gekennzeichnet, dass** das Spreizelement (15) so ausgeführt ist, dass dieses in einem mit dem Konuselement (16) unverspannten Zustand in die Aufnahmeöffnung (13) einsetzbar ist und in einem verspannten Zustand in der Aufnahmeöffnung (13) selbsthaltend einsitzt.

3. Verbindungsanordnung (1) nach Anspruch 1 oder 2, **dadurch gekennzeichnet, dass** das Spreizelement (15) einen Bodenabschnitt (18) aufweist, in dem die Schraubelemente (17) parallel zur Öffnungsachse (14) eingesetzt sind.

4. Verbindungsanordnung (1) nach Anspruch 3, **dadurch gekennzeichnet, dass** der Bodenabschnitt (18) einen Durchmesser aufweist, der größer ist als der Durchmesser der Aufnahmeöffnung (13), sodass der Bodenabschnitt (18) mit einem überstehenden Kragen (19) an einer Seitenfläche (20) eines ersten Gehäuseteils (10) anliegt.

5. Verbindungsanordnung (1) nach einem der vorgenannten Ansprüche, **dadurch gekennzeichnet, dass** die Verbindungsanordnung (1) weiterhin wenigstens eine Schraubverbindung (21) aufweist, die benachbart zur Aufnahmeöffnung (13) zur Verschraubung des ersten Gehäuseteils (10) mit dem zweiten Gehäuseteil (11) vorgesehen sind, wobei die Gehäuseteile (10, 11) mit den Schraubverbindungen (21) plan aufeinander pressbar sind.

6. Brecher (100) zur Zerkleinerung von Brechgut, mit einer Verbindungsanordnung (1) zur lösbaren Verbindung eines ersten Gehäuseteils (10) mit wenigstens einem zweiten Gehäuseteil (11) des Gehäuses (12) des Brechers (100), wobei die Gehäuseteile (10, 11) eine gemeinsame Aufnahmeöffnung (13) aufweisen, die sich wenigstens teilweise in beide Gehäuseteile (10, 11) entlang einer Öffnungsachse (14) hinein erstreckt,
**dadurch gekennzeichnet, dass** in der Aufnahmeöffnung (13) ein Spreizelement (15) eingesetzt ist, das mittels einem Konuselement (16) nach außen und damit radial zur Öffnungsachse (14) gegen die Innenseiten (10a, 11a) der Aufnahmeöffnung (13) verspannbar ist, und wobei das Spreizelement (15) eine Topfform mit einem einseitig offenen Innenraum aufweist, wobei das Konuselement (16) im Innenraum des topfförmigen Spreizelementes (15) einsitzt, und wobei das Spreizelement (15) eine konusförmige Innenkontur aufweist, die auf einer konusförmigen Außenkontur des Konuselementes (16) aufsitzt, und wobei Schraubelemente (17) vorgesehen sind, mit denen das Konuselement (16) in das Spreizelement (15) unter Aufspreizung einer äußeren Zylindermantelfläche des Spreizelementes (15) einziehbar ist.

7. Brecher (100) nach Anspruch 6, **dadurch gekennzeichnet, dass** die Gehäuseteile (10, 11) plattenartig ausgebildet sind, wobei die Öffnungsachse (14) senkrecht auf der Erstreckungsebene der plattenartigen Gehäuseteile (10, 11) steht.

## Claims

1. Connection assembly (1) for releasably connecting a first housing part (10) to at least one second housing part (11) of the housing (12) of a crusher (100) for comminuting crushed material, wherein provision is made of an expansion element (15) which is introducible into a cylindrical receptacle opening (13) which along an opening axis (14) extends at least partially into both housing parts (10, 11), wherein the expansion element (15) by means of a furthermore provided conical element (16) is capable of being braced outward and thus radially to the opening axis (14) against the internal sides (10a, 11a) of the receptacle opening (13), **characterized in that** the expansion element (15) has a pot shape having an interior that is open to one side, wherein the conical element (16) sits in the interior of the pot-shaped expansion element (15), and wherein the expansion element (15) has a conical internal contour which sits on a conical external contour of the conical element (16), and wherein screw elements (17) by way of which the conical element (16) is retractable into the expansion element (15) while expanding the external cylindrical lateral surface of the expansion element (15) are provided.

2. Connection assembly (1) according to Claim 1, **characterized in that** the expansion element (15) is configured so as to be introducible into the receptacle opening (13) in a state not braced by way of the conical element (16) and to sit in the receptacle opening (13) in a self-retaining manner in a braced state.

3. Connection assembly (1) according to Claim 1 or 2, **characterized in that** the expansion element (15) has a base portion (18) in which the screw elements (17) are inserted so as to be parallel with the opening axis (14).

4. Connection assembly (1) according to Claim 3, **characterized in that** the base portion (18) has a diameter which is larger than the diameter of the receptacle opening (13) such that the base portion (18) by way of a projecting collar (19) bears on a lateral face (20) of a first housing part (10).

5. Connection assembly (1) according to one of the preceding claims, **characterized in that** the connection assembly (1) furthermore has at least one screw connection (21), which is provided for screw-fitting the first housing part (10) to the second housing part (11) so as to be adjacent to the receptacle opening (13), wherein the housing parts (10, 11) by way of the screw connections (21) are mutually compressible in a planar manner.

6. Crusher (100) for comminuting crushed material, having a connection assembly (1) for releasably connecting a first housing part (10) to at least one second housing part (11) of the housing (12) of the crusher (100), wherein the housing parts (10, 11) have a common receptacle opening (13) which along an opening axis (14) extends at least partially into both housing parts (10, 11), **characterized in that** an expansion element (15) which by means of a conical element (16) is capable of being braced outward and thus radially to the opening axis (14) against the internal sides (10a, 11a) of the receptacle opening (13) is inserted in the receptacle opening (13), and wherein the expansion element (15) has a pot shape having an interior that is open to one side, wherein the conical element (16) sits in the interior of the pot-shaped expansion element (15), and wherein the expansion element (15) has a conical internal contour which sits on a conical external contour of the conical element (16), and wherein screw elements (17) by way of which the conical element (16) is retractable into the expansion element (15) while expanding an external cylindrical lateral surface of the expansion element (15) are provided.

7. Crusher (100) according to Claim 6, **characterized in that** the housing parts (10, 11) are configured in the manner of plates, wherein the opening axis (14) lies perpendicularly on the plane of extent of the plate-type housing parts (10, 11).

## Revendications

1. Système de liaison (1) servant à la liaison libérable d'une première partie (10) à au moins une deuxième partie (11) du carter (12) d'un broyeur (100) servant au broyage d'un produit à broyer, dans lequel un élément d'écartement (15) est prévu, lequel peut être inséré dans une ouverture de réception cylindrique (13) qui s'étend au moins partiellement dans les deux parties de carter (10, 11) le long d'un axe d'ouverture (14), dans lequel l'élément d'écartement (15) peut être serré vers l'extérieur et donc radialement par rapport à l'axe d'ouverture (14) contre les côtés intérieurs (10a, 11a) de l'ouverture de réception (13) au moyen d'un élément conique (16) prévu en outre,
**caractérisé en ce que** l'élément d'écartement (15) présente une forme de pot comprenant un espace intérieur ouvert d'un côté, l'élément conique (16) étant placé dans l'espace intérieur de l'élément d'écartement (15) en forme de pot, et l'élément d'écartement (15) présentant un contour intérieur conique qui repose sur un contour extérieur conique de l'élément conique (16), et des éléments à visser (17) étant prévus, à l'aide desquels l'élément conique (16) peut être rentré dans l'élément d'écartement (15) en écartant une surface d'enveloppe cylindrique extérieure de l'élément d'écartement (15).

2. Système de liaison (1) selon la revendication 1, **caractérisé en ce que** l'élément d'écartement (15) est réalisé de telle sorte que celui-ci peut être inséré dans l'ouverture de réception (13) dans un état non serré à l'aide de l'élément conique (16) et est placé de manière autobloquante dans l'ouverture de réception (13) dans un état serré.

3. Système de liaison (1) selon la revendication 1 ou 2, **caractérisé en ce que** l'élément d'écartement (15) comprend une partie de fond (18) dans laquelle les éléments à visser (17) sont insérés parallèlement à l'axe d'ouverture (14).

4. Système de liaison (1) selon la revendication 3, **caractérisé en ce que** la partie de fond (18) présente un diamètre qui est supérieur au diamètre de l'ouverture de réception (13), de sorte que la partie de fond (18) s'appuie contre une surface latérale (20) d'une première partie de carter (10) par une collerette saillante (19).

5. Système de liaison (1) selon l'une des revendications précédentes, **caractérisé en ce que** le système de liaison (1) comprend en outre au moins une liaison par vissage (21) qui est prévue de manière adjacente à l'ouverture de réception (13) pour le vissage de la première partie de carter (10) sur la deuxième partie de carter (11), les parties de carter (10, 11) pouvant être pressées l'une sur l'autre de manière plane à l'aide des liaisons par vissage (21).

6. Broyeur (100) servant au broyage d'un produit à broyer, comprenant un système de liaison (1) servant à la liaison libérable d'une première partie (10) à au moins une deuxième partie (11) du carter (12) du broyeur (100), dans lequel les parties de carter (10, 11) comprennent une ouverture de réception commune (13) qui s'étend au moins partiellement dans les deux parties de carter (10, 11) le long d'un axe d'ouverture (14), **caractérisé en ce qu'**un élément d'écartement (15) est inséré dans l'ouverture de réception (13), lequel peut être serré vers l'extérieur et donc radialement par rapport à l'axe d'ouverture (14) contre les côtés intérieurs (10a, 11a) de l'ouverture de réception (13) au moyen d'un élément conique (16), et l'élément d'écartement (15) présentant une forme de pot comprenant un espace intérieur ouvert d'un côté, l'élément conique (16) étant placé dans l'espace intérieur de l'élément d'écartement (15) en forme de pot, et l'élément d'écartement (15) présentant un contour intérieur conique qui repose sur un contour extérieur conique de l'élément conique (16), et des éléments à visser (17) étant prévus, à l'aide desquels l'élément conique (16) peut être rentré dans l'élément d'écartement (15) en écartant une surface d'enveloppe cylindrique extérieure de l'élément d'écartement (15).

7. Broyeur (100) selon la revendication 6, **caractérisé en ce que** les parties de carter (10, 11) sont formées à la manière de plaques, l'axe d'ouverture (14) étant perpendiculaire au plan d'étendue des parties de carter (10, 11) de type plaques.
